# EUROPÄISCHE PATENTSCHRIFT

(11) **EP 0 605 862 B1**
(45) Veröffentlichungstag und Bekanntmachung des Hinweises auf die Patenterteilung: **14.10.1998**
(21) Anmeldenummer: 93120912.6
(22) Anmeldetag: 27.12.1993
(51) Int. Cl.: C08L 77/00, C08K 3/22

(54) **Schwerentflammbare Polyamidformmassen**
Flame retardant polyamide moulding compositions
Masses à mouler à base de polyamides difficilement inflammables

(30) Priorität: 07.01.1993 DE 4300261; 11.01.1993 DE 4300451; 26.03.1993 DE 4309965; 15.07.1993 DE 4323676
(43) Veröffentlichungstag der Anmeldung: 13.07.1994
(73) Patentinhaber: BAYER AG, 51368 Leverkusen (DE)
(72) Erfinder: El Sayed, Aziz, Dr., D-51375 Leverkusen (DE); Ostlinning, Edgar, Dr., D-40237 Düsseldorf (DE); Idel, Karsten-Josef, Dr., D-47802 Krefeld (DE)

(56) Entgegenhaltungen:
- EP-A- 0 335 165
- EP-A- 0 430 350
- EP-A- 0 561 548
- EP-A- 0 571 241
- EP-A- 0 576 951

## Beschreibung

Die Erfindung betrifft leichtverarbeitbare Polyamidformmassen mit sehr guten mechanischen und elektrischen Eigenschaften sowie hoher Oberflächengüte, auf Basis von Copolyamiden und Magnesiumhydroxid.

Polyamide sind hochwertige Thermoplaste und zeichnen sich besonders aus durch:
- leichte Verarbeitbarkeit
- sehr gute mechanische Eigenschaften
- sehr gute elektrische Eigenschaften
- hohe Wärmeformbeständigkeit
- gute Chemikalienbeständigkeit
- sehr gute Oberflächenqualität.

Die Eigenschaften der Polyamide lassen sich durch Verstärkung mit Glasfasern, Glaskugeln, mineralischen Füllstoffen oder Mischungen aus diesen merklich erweitern. Zusatz von Elastomeren verbessert z.B. die Schlagzähigkeit der verstärkten Polyamide. Die Vielzahl der Kombinationsmöglichkeiten ermöglicht eine sehr große Zahl von Produkten mit unterschiedlichsten Eigenschaften.

Durch den Einsatz von mineralischen Füllstoffen und/oder Glasfasern kann z.B. die Oberflächengüte negativ beeinflußt werden. Auch im Elektrobereich haben sich die Polyamide seit langem bewährt. Für dieses Einsatzgebiet werden hauptsächlich brandgeschützte Polyamide verwendet. Folgende Brandschutzmittel sind bekannt und werden seit langem in Polyamiden eingesetzt:

### Roter Phosphor:

Roten Phosphor Polyamiden zuzumischen ist z.B. aus der DE-A-3 713 746 A 1 (= US-A-4 877 823 und EP-A-299 444 (= US-A-5 081 222) bekannt. Hauptsächlich wird er glasfaserverstärktem PA 66 und 6/6T zugemischt. Wegen der roten Eigenfarbe des Phosphors und seines pigmentartigen Charakters können solche Compounds nur in dunklen Farben geliefert werden. Außerdem neigen sie bei der Einwirkung von Feuchtigkeit und Wärme zur Bildung von Phosphin und Phosphaten (durch Disproportionierung des Phosphors). Phosphin korrodiert z.B. die kupferhaltigen Kontakte in elektrischen Installationen und Anlagen. Phosphate bilden dagegen leitfähige Beläge zwischen den elektrischen Kontakten. Durch geeignete Stabilisatoren wird die Disproportionierungsreaktion des Phosphors verzögert, aber nicht unterbunden.

### Organische Halogenverbindungen

Bromierte Diphenyle oder Diphenylether in Kombination mit Antimontrioxid als Zusatz zu Polyamiden wurden lange Zeit eingesetzt. Zunehmend werden folgende Halogenverbindungen verwendet:
- Chlorierte cycloaliphatische Kohlenwasserstoffe (Dechlorane® plus von Occidental Chemical Co.),
- Bromierte Styrol-Oligomere (z.B. in DE-A-2 703 419),
- Kernbromierte Polystyrole (z.B. Pyro-Chek 68® von FERRO Chemicals).

Als Synergist zu den genannten Halogenverbindungen werden auch Zinksalze oder Eisenoxide eingesetzt. Die meisten Flammschutzmittel auf Halogenbasis beginnen sich bei den Verarbeitungstemperaturen von Polyamiden zu ersetzen. Dabei bilden sich korrodierend wirkende Gase. Als Folge werden z.B. die elektrischen Kontakte in Schaltern bzw. elektrischen Installationen zerstört. Außerdem werden die elektrischen Eigenschaften der Polyamide durch die gebildeten ionogenen Spaltprodukte beeinträchtigt.

Für die Herstellung von Teilen in hellen Farben werden diese Nachteile jedoch in Kauf genommen.

### Stickstoffverbindungen

Unter den Stickstoffverbindungen haben sich vor allem Melaminsalze als Flammschutzmittel nur für unverstärkte Polyamide bewährt. Solche Produkte haben eine helle Eigenfarbe und besitzen gute elektrische Eigenschaften. Nachteilig ist die relativ niedrige Zersetzungstemperatur von Melaminsalzen.

### Magnesiumhydroxid

Magnesiumhydroxid hat sich als Flammschutzmittel für Polyolefine und Elastomere seit langem bewährt. Es hat gegenüber dem bisher verwendeten Aluminiumhydroxid den Vorteil der höheren Wasserabspaltungstemperatur (>340°C). Der Einsatz von Magnesiumhydroxid in Polyamiden ist in der Literatur beschrieben. Eine Konzentration von über 55 % ist allerdings erforderlich, um bei 1,6 mm Dicke die Bewertung V 0 nach UL 94 (US Brandprüfung nach Underwriter Laboratories) zu erreichen. Die Verarbeitbarkeit solcher Produkte ist problematisch. Die mechanischen Eigenschaften daraus hergestellter Formkörper sinken auf ein tieferes Niveau. Außerdem wird die Oberflächenqualität merklich verschlechtert. In der EP-A-0 335 165 (= US-4 963 610) wird vorgeschlagen, Polyamid mit 0,1 bis 20 Gew.-% eines funktionalisierten Olefinhomo- oder Copolymeren und 3 bis 30 Gew.-% einer Verstärkungsfaser abzumischen, um mit 40 bis 70 % speziellen Magnesiumhydroxidsorten (spez. Oberfläche weniger als 18 m²/g) flammhemmende Compounds herzustellen. Mit anderem Magnesiumhydroxid und ohne olefinische Additive wird die Bewertung V 0 bei 1,6 mm Dicke nach UL 94 nicht erzielt. Durch die Koppelung der speziellen Polyolefine an Polyamid und die hohen Füllgrade lassen sich solche Compounds nicht leicht verarbeiten.

Der Erfindung liegt die Aufgabe zugrunde, phosphor- und halogenfreie, leicht verarbeitbare Polyamidformmassen und Formteile hieraus ohne die bekannten Nachteile, mit der Klassifizierung VO bei 1,6 mm nach UL 94 herzustellen, die außerdem gute mechanische, elektrische Eigenschaften und gute Oberflächen aufweisen.

Es wurde nun gefunden, daß durch Verwendung von thermoplastischen Copolyamiden, Verstärkungsstoffen, Elastomermodifikator, Magnesiumhydroxid, Additiven, wie Gleitmitteln, Stabilisatoren und Nukleierungsmitteln, die obengenannten Anforderungen erreicht werden.

Gegenstand der Erfindung sind schwerentflammbare Polyamidformmassen aus
A) von 30 bis 55 Gew.-%, bevorzugt 35 bis 50 Gew.-% eines thermoplastischen, teilkristallinen Copolyamids,
B) 0 bis 30 Gew.-% Verstärkungsstoffen,
C) 0 bis 15 Gew.-%, bevorzugt 0 bis 10 % Elastomermodifikatoren,
D) 40 bis 60 Gew.-%, bevorzugt 45 bis 55 Gew.-% Magnesiumhydroxiden und
E) 0 bis 2 Gew.-% Verarbeitungsadditiven.

Ein weiterer Gegenstand der Erfindung ist die Verwendung der Polyamidformmassen zur Herstellung von Formkörpern.

Die Herstellung der erfindungsgemäßen Massen erfolgt auf handelsüblichen Einwellen- und Zweiwellen-Extrudern bzw. Knetern. Die Dosierung des Magnesiumhydroxids erfolgt im Granulattrichter und/oder durch eine Seitenschnecke in der Polyamidschmelze. Die Zugabe der Verstärkungsstoffe C) (z.B. Glasfasern) erfolgt nach dem Stand der Technik in der Glasfaseröffnung kurz vor der Düse. Die Massetemperatur richtet sich nach den verwendeten Polyamiden und liegt zwischen 220 und 340°C.

Als thermoplastisches Copolyamid A) der erfindungsgemäßen Formmassen eignen sich teilkristalline Copolyamide auf Basis teilkristalliner Polyamide (PA), insbesondere PA 6, PA 66, PA 46, PA 610, PA 6/6T mit einem Copolyamidanteil von 1 bis 30 Gew.-%, bevorzugt 3 bis 20 Gew.-%. Ganz besonders bevorzugt sind Copolyamide (CPA) auf Basis PA 6 und PA 66.

Als Verstärkungsstoffe B) für die erfindungsgemäßen Formmassen werden handelsübliche Glasfasern und/oder Kohlefasern und/oder Mineralfasern, gegebenenfalls mit Oberflächenbehandlung für Polyamid, bevorzugt Glasfasern verwendet.

Als Elastomermodifikator C) gemäß dieser Erfindung werden handelsübliche EP(D)M-Kautschuke, Acrylatkautschuke oder EVA Copolymere mit oder ohne funktionelle Kopplungsgruppen verwendet.

Als Magnesiumhydroxid D) gemäß dieser Erfindung wird handelsübliches Magnesiumhydroxid mit oder ohne Oberflächen-Behandlung verwendet. Durch die Behandlung der Oberflächen des Magnesiumhydroxids mit Aminosilanen oder Epoxide werden die mechanischen Eigenschaften deutlich verbessert. Feinteilige (0,4 bis 10 microns Durchmesser) Mg-Hydroxide mit einer Schüttdichte zwischen 0,3 und 0,8 g/ml können gemäß dieser Erfindung bevorzugt verwendet werden.

Die Verarbeitungsadditive E) bestehen aus handelsüblichen Gleitmitteln, Thermostabilisatoren und/oder Nukleierungsmitteln.

### Beispiele

Folgende Produkte wurden in den Beispielen verwendet:
Polyamid 6 = Durethan B31 der Bayer AG
Copolyamid auf Basis PA 6 mit 5 % 66-Anteil = Durethan B31M2 der Bayer AG
Polyamid PA 66 = Durethan A31
Copolyamid auf Basis PA66 mit 10 % 6-Anteil = Radipol C45 Hl
Magnesiumhydroxid = Magnefin H 10 B®, Securose PA®
Glasfaser = Bayerglas CS 7919®
Elastomermodifikator = Exxelor VA 1801® bzw. 1803® der Fa. Exxon
Amidwachs = Abril wax®.

### Beispiele 1 bis 8

Die Einsatzstoffe wurden zum Teil vorgemischt und bei einer Massetemperatur zwischen 250 und 290°C über einen Zweiwellenschneckenkneter extrudiert und anschließend granuliert. Das erhaltene Granulat wurde bei 70°C im Vakuumtrockenschrank 4 h getrocknet und anschließend auf einer Arburg Spritzgießmaschine bei einer Massetemperatur von 290°C zu Prüfkörpern verspritzt.

Die mechanischen und elektrischen Eigenschaften, das Brandverhalten nach UL 94 und die Oberflächengüte wurden bestimmt (siehe Tabellen 1 und 2).

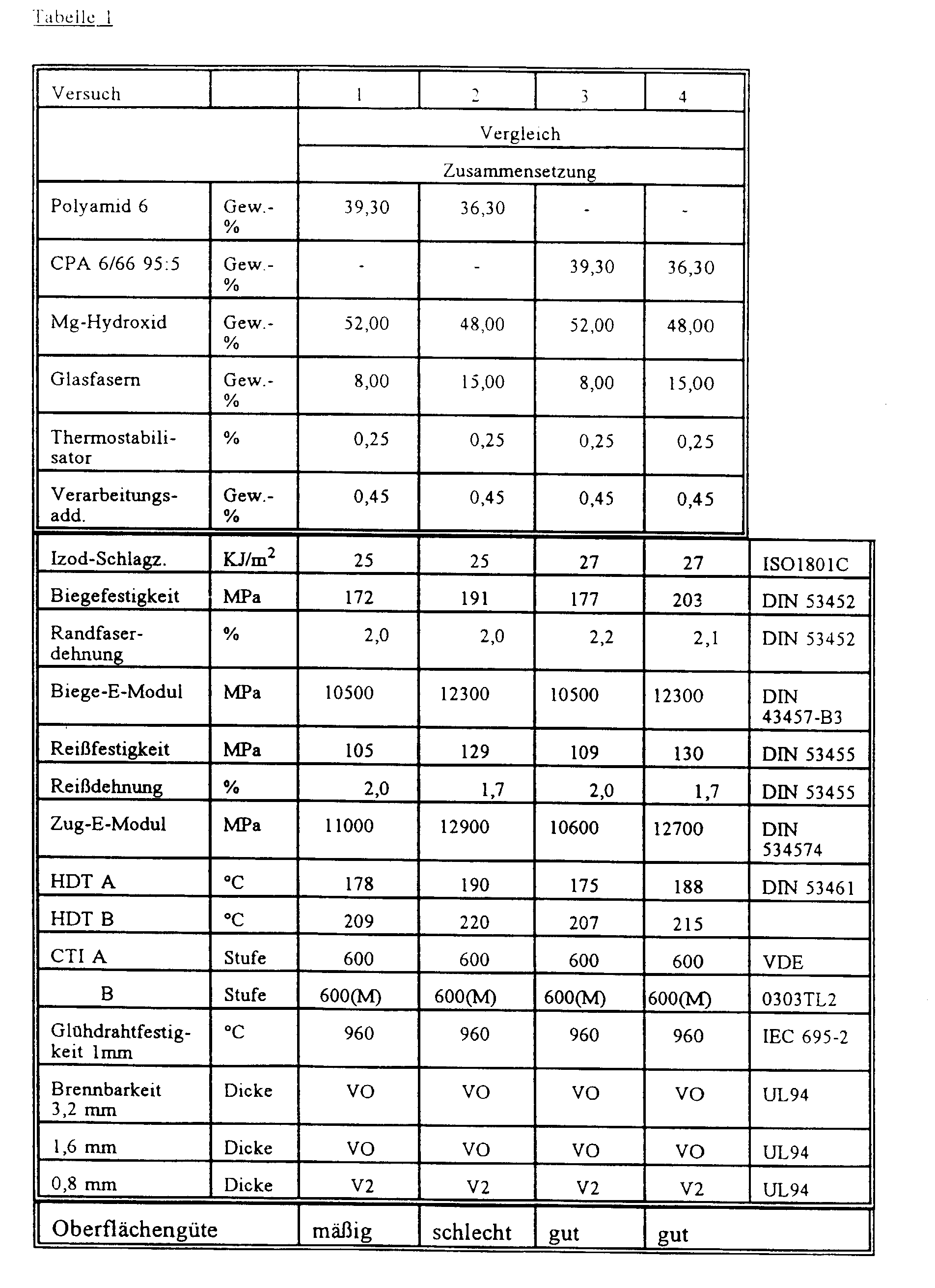

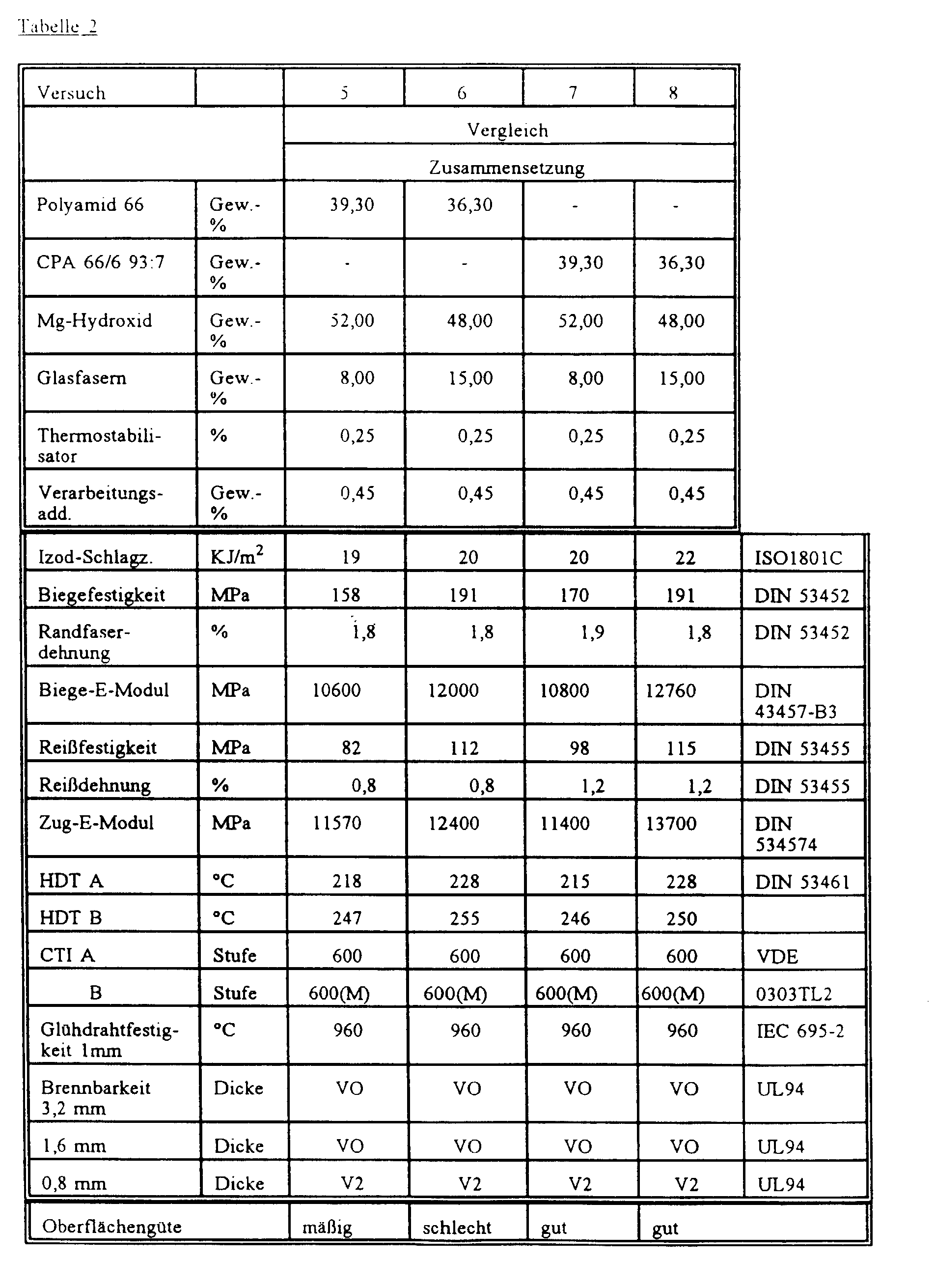

## Patentansprüche

1. Schwerentflammbare Polyamidformmassen aus
A) von 30 bis 55 Gew.-% thermoplastischem, teilkristallinem Copolyamid,
B) von 0 bis 30 Gew.-% Verstärkungsstoffe,
C) von 0 bis 15 Gew.-% Elastomermodifikator,
D) von 40 bis 60 Gew.-% Magnesiumhydroxid und
E) von 0 bis 2 Gew.-% Verarbeitungsadditiven.

2. Formmassen nach Anspruch 1, dadurch gekennzeichnet, daß sie als thermoplastisches, teilkristallines Copolyamid ein CPA 6/66 enthalten.

3. Formmassen nach Anspruch 1, dadurch gekennzeichnet, daß sie als thermoplastisches, teilkristallines Copolyamid ein CPA 66/6 enthalten.

4. Formmassen gemäß Anspruch 1, dadurch gekennzeichnet, daß sie von 10 bis 30 Gew.-% Verstärkungsstoffe enthalten.

5. Formmassen gemäß Anspruch 1, dadurch gekennzeichnet, daß sie von 4 bis 10 Gew.-% Elastomermodifikator enthalten.

6. Formmassen gemäß Anspruch 1, dadurch gekennzeichnet, daß als Verstärkungsstoffe C) Glasfasem, Kohlefasern, Mineralfasem oder Mischungen daraus verwendet werden.

7. Verwendung der Formmassen gemäß Anspruch 1 zur Herstellung geformter Teile.

## Claims

1. Flame-resistant polyamide moulding compositions prepared from
A) 30 to 55 wt.% of thermoplastic, partially crystalline copolyamide,
B) 0 to 30 wt.% of reinforcing materials,
C) 0 to 15 wt.% of elastomer modifier,
D) 40 to 60 wt.% of magnesium hydroxide and
E) 0 to 2 wt.% of processing additives.

2. Moulding compositions according to claim 1, characterised in that they contain a CPA 6/66 as the thermoplastic, partially crystalline copolyamide.

3. Moulding compositions according to claim 1, characterised in that they contain a CPA 66/6 as the thermoplastic, partially crystalline copolyamide.

4. Moulding compositions according to claim 1, characterised in that they contain from 10 to 30 wt.% of reinforcing materials.

5. Moulding compositions according to claim 1, characterised in that they contain from 4 to 10 wt.% of elastomer modifier.

6. Moulding compositions according to claim 1, characterised in that glass fibres, carbon fibres, mineral fibres or mixtures thereof are used as the reinforcing materials C).

7. Use of the moulding compositions according to claim 1 for the production of shaped articles.

## Revendications

1. Matières à mouler de polyamide difficilement inflammables constituées
A) de 30 à 55% en poids de copolyamide thermoplastique, partiellement cristallin,
B) de 0 à 30% en poids de matières de renforcement,
C) de 0 à 15% en poids de modificateur d'élastomère,
D) de 40 à 60% en poids d'hydroxyde de magnésium et
E) de 0 à 2% en poids d'additifs de façonnage.

2. Matières à mouler selon la revendication 1, caractérisées en ce qu'elles contiennent comme copolyamide thermoplastique partiellement cristallin un CPA 6/66.

3. Matières à mouler selon la revendication 1, caractérisées en ce qu'elles contiennent comme copolyamide thermoplastique partiellement cristallin un CPA 66/6.

4. Matières à mouler selon la revendication 1, caractérisées en ce qu'elles contiennent 10 à 30% en poids de matières de renforcement.

5. Matières à mouler selon la revendication 1, caractérisées en ce qu'elles contiennent de 4 à 10% en poids de modificateur d'élastomère.

6. Matières à mouler selon la revendication 1, caractérisée en ce que l'on utilise comme matières de renforcement C) des fibres de verre, des fibres de carbone, des fibres minérales ou des mélanges de celles-ci.

7. Utilisation des matières à mouler selon la revendication 1 pour la préparation de pièces moulées.
